# EUROPÄISCHE PATENTANMELDUNG

(11) **EP 4 245 456 A1**
(43) Veröffentlichungstag der Anmeldung: **20.09.2023**
(21) Anmeldenummer: 22162976.9
(22) Anmeldetag: 18.03.2022
(51) Int. Cl.: B23K 26/20, B23K 26/38, B23K 26/70, H02P 3/14

(54) **LASERBEARBEITUNGSMASCHINE UND VERFAHREN ZUM BETREIBEN DER LASERBEARBEITUNGSMASCHINE**

(71) Anmelder: Bystronic Laser AG, 3362 Niederönz (CH)
(72) Erfinder: Lechthaler, Iso, 3360 Herzogenbuchsee (CH)
(74) Vertreter: Fink Numrich Patentanwälte PartmbB

(57) **Zusammenfassung**

Die Erfindung beschreibt eine Laserbearbeitungsmaschine (100), insbesondere Laserschneidmaschine. Die erfindungsgemäße Laserbearbeitungsmaschine (100) weist eine Bearbeitungseinheit (3) auf, die relativ zu einer Arbeitsebene der Laserbearbeitungsmaschine (100) in mindestens einer Richtung (x, y, z) mittels jeweils eines Elektromotors (20; 20X, 20Y, 20Z) linear bewegbar ist. Jeder der Elektromotoren (20; 20X, 20Y, 20Z) wird im Betrieb aus einer zugeordneten Antriebssteuerung (30; 30X, 30Y, 30Z), die einen Gleichspannungszwischenkreis (33) umfasst, mit Energie versorgt. Der Gleichspannungszwischenkreis (33) weist ein Energiespeichersystem (37) auf, das dazu ausgebildet ist, im Betrieb der Laserbearbeitungsmaschine (100) in den Gleichspannungszwischenkreis (33) gespeiste Bremsenergie eines jeweiligen Elektromotors (20; 20X, 20Y, 20Z) zwischenzuspeichern und die zwischengespeicherte Energie bei einer Leistungsanforderung eines jeweiligen Elektromotors (20; 20X, 20Y, 20Z) zu dessen Antrieb in den Gleichspannungszwischenkreis (33) abzugeben.

## Beschreibung

Die vorliegende Erfindung betrifft eine Laserbearbeitungsmaschine, insbesondere eine Laserschneidmaschine, mit einer Bearbeitungseinheit, die relativ zu einer Arbeitsebene der Laserbearbeitungsmaschine in mindestens einer Richtung mittels jeweils eines Elektromotors linear bewegbar ist. Die Erfindung betrifft ferner ein Verfahren zum Betreiben einer derartigen Laserbearbeitungsmaschine.

Laserbearbeitungsmaschinen werden dazu verwendet, mit Hilfe von hochenergetischem Laserlicht Werkstücke zu bearbeiten, wie z.B. Bleche zu schneiden. Die Bearbeitungseinheit ist in der Regel auf einem verfahrbaren Wagen angebracht und weist einen Bearbeitungskopf auf, der aus Laserlicht einen Laserstrahl zur Bearbeitung des Werkstücks generiert. Die Bearbeitungseinheit ist zur Positionsveränderung des Bearbeitungskopfs auch relativ zum verfahrbaren Wagen bewegbar, wobei zum Antrieb jeweiliger Komponenten diesen zugeordnete Elektromotoren genutzt werden. Jeder Elektromotor wird von einer Antriebssteuerung mit Energie versorgt, die z.B. als (indirekter) Umrichter mit einem Gleichspannungszwischenkreis ausgebildet ist.

Typischerweise umfasst die Antriebssteuerung für jeden Elektromotor dazu einen netzgekoppelten Gleichrichter, der den Gleichspannungszwischenkreis mit einer Spannung versorgt, und einen an den Elektromotor angeschlossenen Wechselrichter, der mit der Gleichspannung aus dem Gleichspanungszwischenkreis den Elektromotor betreibt. Abhängig von einem Betriebszustand des Elektromotors wird entweder vom Gleichrichter Energie in den Gleichspannungszwischenkreis gespeist, um den Motor im sog. Motorbetrieb mit Energie zu versorgen, oder Bremsenergie vom Motor in den Zwischenkreis gespeist, wenn der Motor im sog. Generatorbetrieb betrieben wird. Um die im Generatorbetrieb anfallende Energie aus der Antriebssteuerung abführen zu können, ist in dem Gleichspannungszwischenkreis ein Widerstand (sog. Bremswiderstand) angeordnet.

Aus der US 2011 / 0 024 401 A1 ist ein Verfahren zur Energierückgewinnung einer Laserbearbeitungsmaschine bekannt, bei dem der Laserbearbeitungsmaschine im Betrieb thermische Energie entnommen und über ein oder mehrere Energierückgewinnungssysteme zurückgespeist wird. Als Rückgewinnung von Energie wird die Nutzung von übriger (oder auch ungenutzter) Energie, welche nicht dem eigentlichen Zweck der Laserbearbeitungsmaschine dient, verstanden. Die übrige Energie ist vor allem thermische Energie, die bevorzugt im Resonator, besonders bevorzugt im Lasermedium anfällt. Als andere übrige Energieformen in der Laserbearbeitungsmaschine werden beispielsweise mechanische Energie oder elektrische Energie oder magnetische Energie aufgeführt. Das Energierückgewinnungssystem kann thermodynamisch ausgelegt sein, beispielsweise als Wärmekraftmaschine, physikalisch/chemisch, thermoelektrisch, biologisch oder chemisch. Im Zuge der Energierückgewinnung kann auch eine Konversion von einer Energieform in eine andere Energieform vorgesehen sein. Allgemein wird eine Umwandlung in elektrische Energie und/oder mechanische Energie und/oder Druck und/oder magnetische Energie vorgeschlagen.

Die Gewinnung von thermischer Restenergie und deren Rückführung zu der Laserbearbeitungsmaschine unter Nutzung eines Energierückgewinnungssystems ist in der Praxis aufwendig umzusetzen.

Es ist Aufgabe der Erfindung, eine Laserbearbeitungsmaschine sowie ein Verfahren zum Betreiben einer Laserbearbeitungsmaschine anzugeben, welche baulich und/oder funktional dahingehend verbessert sind, dass bei deren Betrieb eine hohe Energieeffizienz ermöglicht wird.

Diese Aufgaben werden gelöst durch eine Laserbearbeitungsmaschine gemäß den Merkmalen des Anspruchs 1 und ein Verfahren zum Betreiben einer Laserbearbeitungsmaschine gemäß den Merkmalen des Anspruchs 11. Vorteilhafte Ausgestaltungen ergeben sich aus den abhängigen Ansprüchen.

Die erfindungsgemäße Laserbearbeitungsmaschine weist eine Bearbeitungseinheit auf, die relativ zu einer Arbeitsebene der Laserbearbeitungsmaschine in mindestens einer Richtung mittels jeweils eines Elektromotors linear bewegbar ist. Jeder der Elektromotoren wird im Betrieb aus einer zugeordneten Antriebssteuerung, die einen Gleichspannungszwischenkreis umfasst, mit Energie versorgt. Die den Gleichspannungszwischenkreis umfassende Antriebssteuerung ist vorzugsweise ein indirekter Umrichter.

Die Bearbeitungseinheit kann einen Bearbeitungskopf aufweisen, der derart ausgestaltet ist, dass er im Betrieb der Laserbearbeitungsmaschine einen Laserstrahl aus Laserlicht auf ein zu bearbeitendes Werkstück, das in der Arbeitsebene der Laserbearbeitungsmaschine angeordnet ist, richtet. Vorzugsweise ist die Laserbearbeitungsmaschine eine Laserschneidmaschine zum Schneiden von Werkstücken und insbesondere Blechen oder rohrförmigen Körpern aus Metall. In diesem Fall handelt es sich bei dem Bearbeitungskopf um einen Schneidkopf, dessen Laserstrahl das entsprechende Werkstück zerschneidet.

In der erfindungsgemäßen Laserbearbeitungsmaschine weist der Gleichspannungszwischenkreis ein Energiespeichersystem auf, das dazu ausgebildet ist, im Betrieb der Laserbearbeitungsmaschine in den Gleichspannungszwischenkreis gespeiste Bremsenergie eines jeweiligen Elektromotors zwischenzuspeichern und die zwischengespeicherte Energie bei einer Leistungsanforderung eines jeweiligen Elektromotors zu dessen Antrieb in den Gleichspannungszwischenkreis abzugeben. Bremsenergie eines jeweiligen Elektromotors wird beispielsweise beim generatorischen Betrieb des Elektromotors in Folge des Abbaus von kinetischer Energie der Bearbeitungseinheit erzeugt.

Die erfindungsgemäße Laserbearbeitungsmaschine weist den Vorteil auf, dass die beim Bremsen eines jeweiligen Elektromotors anfallende Bremsenergie in dem Energiespeichersystem zwischengespeichert und zu einem späteren Zeitpunkt zum Antrieb des Elektromotors wieder genutzt werden kann. Dabei braucht keine Umwandlung von einer Energieform in eine andere Energieform erfolgen, wodurch lediglich geringfügige Änderungen am elektrischen System der Laserbearbeitungsmaschine erforderlich sind und Energieverluste minimiert sind. Neben einem Betrieb mit hohem Wirkungsgrad kann die Laserbearbeitungsmaschine zu geringen Kosten bereitgestellt werden.

Ein besonderer Vorteil besteht darin, dass die Laserbearbeitungsmaschine mit verringertem Energieverbrauch also energieeffizienter betrieben werden kann. Insbesondere kann die Belastung des die Laserbearbeitungsmaschine speisenden Versorgungsnetzes reduziert werden. Durch die reduzierte primäre Stromaufnahme aus dem, die Laserbearbeitungsmaschine speisenden, Versorgungsnetz reduziert sich auch die Leistung, die in der Antriebssteuerung umgewandelt werden muss. Dadurch sinkt die Abwärmeleistung der Antriebssteuerung, mit der positiven Folge einer verringerten thermischen Belastung der Komponenten der Antriebssteuerung. Hierdurch kann auch eine notwendige Kühlleistung zur Kühlung der Komponenten der Antriebssteuerung reduziert werden. Neben einer positiven ökologischen Bilanz reduzieren sich die Herstellkosten der Laserbearbeitungsmaschine bei gleichzeitig höherer Lebensdauer der Komponenten der Antriebssteuerung.

In einer zweckmäßigen Ausgestaltung weist das Energiespeichersystem einen Energiespeicher auf, der über einen Gleichspannungswandler des Energiespeichersystems an den Gleichspannungszwischenkreis angeschlossen ist. Über den Gleichspannungswandler kann der Energiespeicher im generatorischen Betrieb eines jeweiligen Elektromotors Energie aufnehmen und im motorischen Betrieb Energie abgeben.

Eine weitere zweckmäßige Ausgestaltung sieht vor, dass das Energiespeichersystem als Energiespeicher einen kapazitiven Energiespeicher, insbesondere einen Kondensator oder einen Supercap, oder einen Akkumulator aufweist. Kapazitive Energiespeicher und Akkumulatoren sind vorteilhafterweise in der Lage, in kurzer Zeit große Energiemengen aufnehmen und speichern oder abgeben zu können. Gleichzeitig stehen diese in unterschiedlichen Größen zu wirtschaftlichen Preisen zur Verfügung, so dass diese gut in die Laserbearbeitungsmaschine integriert werden können.

In einer alternativen oder zusätzlichen Ausgestaltung kann das Energiespeichersystem als Energiespeicher einen Massenträgheitsspeicher aufweisen. Ein Massenträgheitsspeicher, der einen kinetischen Energiespeicher darstellt, ist ebenfalls in der Lage, in kurzer Zeit große Energiemengen aufnehmen oder abgeben zu können. Gleichzeitig können diese als wartungsfreie Energiespeicher bereitgestellt werden.

Gemäß einer weiteren zweckmäßigen Ausgestaltung weist das Energiespeichersystem eine Spannungsmesseinrichtung zur Bestimmung der Zwischenkreisspannung und eine Steuerungseinrichtung, der die von der Spannungsmesseinrichtung erfasste Zwischenkreisspannung der Steuerungseinrichtung als Eingangsinformation zugeführt wird, auf. Die Steuerungseinrichtung ist dabei dazu ausgebildet, die Energieflussrichtung, insbesondere durch Steuerung des Gleichspannungswandlers, aus dem oder in den Gleichspannungszwischenkreis abhängig von einem Vergleich der Zwischenkreisspannung mit einem vorgegebenen Schwellwert zu steuern.

Dieses Vorgehen basiert auf dem Prinzip, dass in den Gleichspannungszwischenkreis gespeiste Energie oder aus dem Gleichspannungszwischenkreis entnommene Energie zu einer Schwankung der Zwischenkreisspannung führt. Z.B. führt die in den Gleichspannungszwischenkreis gespeiste Bremsenergie eines Elektromotors zu einer (temporären) Erhöhung der Zwischenkreisspannung im Gleichspannungszwischenkreis führt. Überschreitet die Zwischenkreisspannung einen vorgegebenen Schwellwert, so kann durch geeignete Steuerung des Gleichspannungswandlers die in dem Gleichspannungszwischenkreis enthaltene Energie in das Energiespeichersystem eingespeist werden. Sinkt andererseits die in dem Gleichspannungszwischenkreis anliegende Zwischenkreisspannung, z.B. aufgrund einer Energieentnahme aus dem Gleichspannungszwischenkreis beim Antrieb eines Elektromotors, so wird (durch geeignete Steuerung des Gleichspannungswandlers) durch die in dem Energiespeichersystem enthaltene Energie die Spannung im Gleichspannungszwischenkreis solange stabilisiert, bis dies aufgrund der Entladung des Energiespeichersystems nicht mehr möglich ist. Infolgedessen sinkt die Zwischenkreisspannung des Gleichspannungszwischenkreises weiter ab, so dass schließlich über die Antriebssteuerung aus dem Versorgungsnetz Energie in den Gleichspannungszwischenkreis übertragen wird.

Es ist zweckmäßig, wenn der vorgegebene Schwellwert größer als eine Nenn-Zwischenkreisspannung ist. Insbesondere hat es sich in Versuchen als zweckmäßig herausgestellt, wenn der vorgegebene Schwellwert zwischen 5 % und 10 % größer als die Nenn-Zwischenkreisspannung ist. In einer typischen Laserbearbeitungsmaschine beträgt die Nenn-Zwischenkreisspannung zwischen 600 V und 800 V.

Eine weitere zweckmäßige Ausgestaltung sieht vor, dass bei einer Mehrzahl von Elektromotoren jede zugeordnete Antriebssteuerung ein eigenes Energiespeichersystem aufweist. Mit anderen Worten ist pro Elektromotor ein Energiespeichersystem vorgesehen. Jedes Energiespeichersystem ist hier an einen eigenen Gleichspannungszwischenkreis angeschlossen.

In einer alternativen Ausgestaltung kann vorgesehen sein, dass bei einer Mehrzahl von Elektromotoren alle Antriebssteuerungen einen gemeinsamen Zwischenkreis nutzen, wobei an den gemeinsamen Zwischenkreis ein gemeinsames Energiespeichersystem angeschlossen ist. Diese zuletzt genannte Variante bietet den Vorteil, dass die Energierückgewinnung von Bremsenergie mit einer geringen Anzahl an zusätzlichen elektrischen Komponenten realisierbar ist. Da eine Mehrzahl von Elektromotoren Energie in das Energiespeichersystem einspeisen kann, ist es zweckmäßig, wenn bei dieser Variante der Energiespeicher des Energiespeichersystems hinsichtlich seiner Größe angepasst ist, da ein gleichzeitiger Brems- oder Antriebsbetrieb mehrerer Elektromotoren möglich ist.

Das erfindungsgemäße Verfahren zum Betreiben einer wie oben beschriebenen Laserbearbeitungsmaschine sieht vor, dass im Betrieb der Laserbearbeitungsmaschine in den Gleichspannungszwischenkreis gespeiste Bremsenergie eines jeweiligen Elektromotors zwischengespeichert wird, und die zwischengespeicherte Energie bei einer Leistungsanforderung eines jeweiligen Elektromotors zu dessen Antrieb in den Gleichspannungszwischenkreis abgegeben wird. Das erfindungsgemäße Verfahren weist die gleichen Vorteile auf, wie diese vorstehend in Verbindung mit der erfindungsgemäßen Laserbearbeitungsmaschine beschrieben wurden.

Gemäß einer weiteren zweckmäßigen Ausgestaltung des erfindungsgemäßen Verfahrens bestimmt eine Spannungsmesseinrichtung des Energiespeichersystems die Zwischenkreisspannung und führt diese einer Steuerungseinrichtung als Eingangsinformation zu, wobei die Steuerungseinrichtung die Energieflussrichtung aus dem oder in den Gleichspannungszwischenkreis abhängig von einem Vergleich der Zwischenkreisspannung mit einem vorgegebenen Schwellwert steuert.

Nachfolgend werden anhand der beigefügten Figuren Ausführungsbeispiele der Erfindung detailliert beschrieben.

Es zeigen:
- Fig. 1: eine schematische perspektivische Ansicht einer Laserbearbeitungsma-schine, bei welcher eine Bearbeitungseinheit mittels mehrerer Elektromotoren entlang verschiedener Richtungen linear bewegbar ist;
- Fig. 2: eine aus dem Stand der Technik bekannte Antriebssteuerung zur Versorgung eines Elektromotors mit Energie;
- Fig. 3: ein elektrisches Ersatzschaltbild der in Fig. 2 dargestellten Antriebssteuerung gemäß dem Stand der Technik;
- Fig. 4: eine schematische Darstellung einer erfindungsgemäßen Antriebssteuerung zur Versorgung eines Elektromotors mit Energie;
- Fig. 5: ein elektrisches Ersatzschaltbild der in Fig. 4 dargestellten Antriebssteuerung; und
- Fig. 6: ein weiteres Ausführungsbeispiel, bei dem mehrere Antriebssteuerungen ein gemeinsames Energiespeichersystem nutzen.

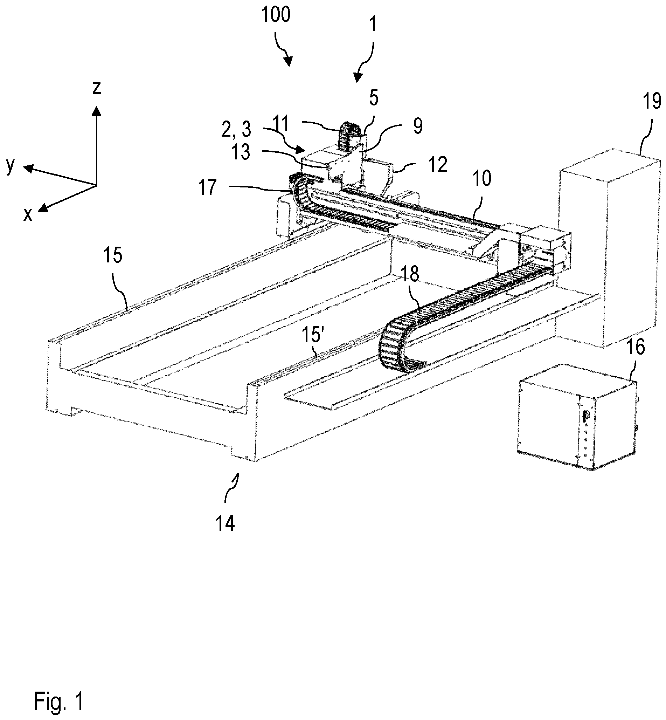

Fig. 1 zeigt eine prinzipiell aus dem Stand der Technik bekannte Laserbearbeitungsmaschine 100 in der Form einer Laserschneidmaschine. Die Laserbearbeitungsmaschine 100 dient zum Schneiden von Blechen unter Verwendung einer Bearbeitungseinrichtung 1, über welche ein hochenergetischer Laserstrahl auf in einer Arbeitsebene der Laserbearbeitungsmaschine 100 angeordnete Bleche gerichtet wird.

Die Bearbeitungsrichtung 1 weist einen verfahrbaren Wagen 2 auf, der in der hier beschriebenen Ausführungsform als Quer- bzw. Schneidwagen ausgestaltet ist und eine nicht näher dargestellte Bearbeitungseinheit 3 trägt. Entsprechend dem in Fig. 1 gezeigten kartesischen Koordinatensystem ist die Bearbeitungseinheit 3 in vertikaler z-Richtung relativ zu dem Wagen 2 mittels einer (nicht gezeigten) Aktorik bewegbar.

Der Wagen 2 ist auf einer Brücke 10 angeordnet, die in der hier beschriebenen Ausführungsform eine Schneidbrücke darstellt. Entlang der Brücke 10 ist der Wagen 2 mittels einer (nicht gezeigten) Aktorik in der horizontalen y-Richtung gemäß dem dargestellten Koordinatensystem verfahrbar.

Wie sich aus der Ansicht der Laserbearbeitungsmaschine der Fig. 1 ergibt, ist auch die Brücke 10 verfahrbar, und zwar in der horizontalen x-Richtung des dargestellten Koordinatensystems, d.h. senkrecht zu dem Verfahrweg des Wagens 2. Hierfür ist die Brücke auf einem Rahmen 14 mit zwei sich in x-Richtung erstreckenden Trägern 15 und 15' angeordnet. Die Brücke 10 liegt auf diesen Trägern 15, 15' auf und kann entlang deren Längsrichtung mit geeigneter (nicht dargestellter) Aktorik verfahren werden.

Jede der nicht dargestellten Aktoriken umfasst eine Elektromotor und eine den Elektromotor speisende Antriebssteuerung. Um die Bearbeitungseinheit 3 in jeder der x-y-z-Richtungen bewegen zu können, sind somit mindestens drei Elektromotoren vorgesehen, die in Fig. 1 nicht näher dargestellt sind. Die Antriebssteuerung der Elektromotoren sind einem Schaltschrank 19 angeordnet.

Die Bearbeitungseinheit 3 weist in bekannter Weise einen (nicht dargestellten) Bearbeitungskopf auf, der z.B. als Schneidkopf ausgestaltet ist und an dem ein nicht dargestelltes Faserkabel angeschlossen ist, über das dem Bearbeitungskopf Laserlicht zugeführt wird. Das Laserlicht stammt von einer Laserlichtquelle, die in Fig. 1 mit dem Bezugszeichen 16 bezeichnet ist. In dem Bearbeitungskopf befindet sich eine Optik, die aus dem Laserlicht, das über das Faserkabel in den Bearbeitungskopf geleitet wird, einen Laserstrahl erzeugt, der in Richtung der Arbeitsebene nach unten gerichtet wird. Unterhalb des Bearbeitungskopfs befindet sich im Betrieb der Laserbearbeitungsmaschine 100 das nicht gezeigte zu schneidende Blech, das gemäß der Darstellung der Fig. 1 zwischen den Trägern 15 und 15' des Rahmens 14 in der x-y-Ebene als Arbeitsebene der Laserbearbeitungsmaschine 100 positioniert ist.

Neben dem Faserkabel werden dem Bearbeitungskopf in an sich bekannter Weise weitere Leitungen zugeführt, die für seinen Betrieb benötigt werden. Diese Leitungen, die hier nicht dargestellt sind, umfassen unter anderem elektrische Leitungen zur Stromversorgung der Elektromotoren, Steuerkabel sowie Schläuche zur Zuführung von Druckluft und von für den Schneidvorgang benötigtem Gas. Die Leitungen werden dabei separat zum Faserkabel über eine an sich bekannte Energiekette 11 vom Wagen 2 zum Bearbeitungskopf geführt. Die Energiekette 11, die sich in z-Richtung nach oben erstreckt, wird auch als Z-Kabelführung bezeichnet. Die Energiekette ermöglicht eine Verschiebung der darin geführten Leitungen über die Veränderung ihrer Biegeposition, wenn sich der Bearbeitungskopf bzw. die Bearbeitungseinheit 3 relativ zum Wagen 2 bewegt.

In der Darstellung der Fig. 1 ist die Laserbearbeitungsmaschine 100 aus der Perspektive gezeigt, welche die Kabelführung entlang der Bücke 10 und des Rahmens 14 verdeutlicht. Aus dieser Perspektive ist die Bearbeitungseinrichtung 1 hinter der Brücke 10 positioniert und teilweise durch diese verdeckt. Demzufolge ist auch der bereits beschriebene Bearbeitungskopf nicht ersichtlich, der sich hinter der Brücke befindet. Gemäß Fig. 1 verlässt das Faserkabel den Wagen 2 über einen Schlitz 13, wobei das Faserkabel so gebogen wird, dass es in eine Energiekette 17 eintritt, die sich in horizontaler y-Richtung erstreckt und auch als Y-Kabelführung bezeichnet wird. Innerhalb dieser Energiekette werden in an sich bekannter Weise auch die weiteren Leitungen geführt, die über die Z-Kabelführung 11 zum Bearbeitungskopf gelangen. Die Energiekette 17 gewährleistet die Nachführung der darin aufgenommenen Leitungen bzw. Kabel beim Verfahren des Wagens 2. Von der Y-Kabelführung gelangen die Kabel über an sich bekannte Kabelkanäle, die hier nicht näher erläutert werden, zu einer weiteren Energiekette 18, die auch als X-Kabelführung bezeichnet wird, und die Nachführung der darin enthaltenen Kabel bei Verfahren der Brücke 10 in die x-Richtung gewährleistet. Nach Verlassen der X-Kabelführung werden die Kabel entsprechend ihrer Funktion zu dem Schaltschrank 19 zur Steuerung der Laserbearbeitungsmaschine und/oder zu der bereits oben erwähnten Laserlichtquelle 16 geführt. Diese Kabelführung ist in Fig. 1 nicht wiedergegeben.

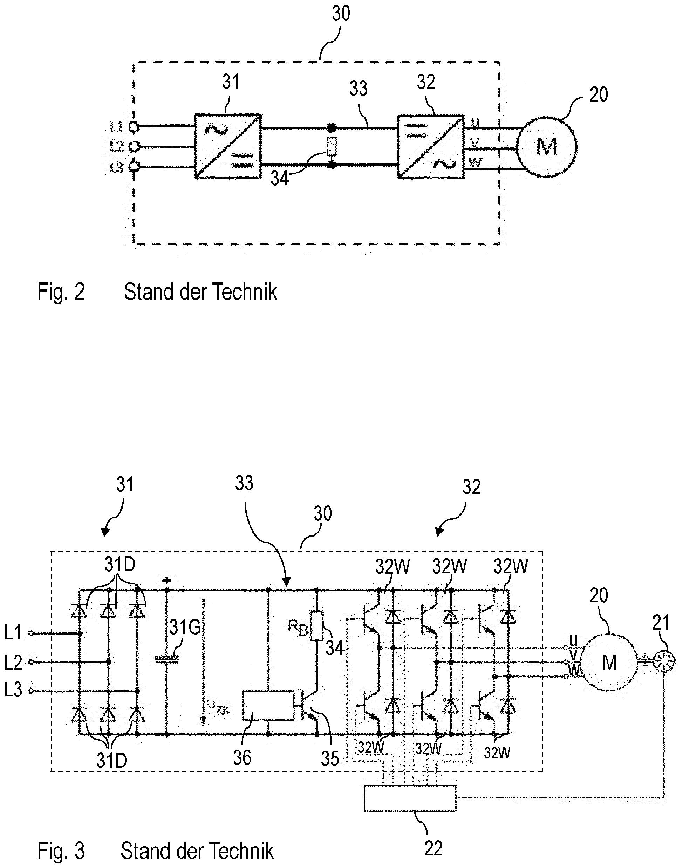

Die Elektromotoren der Aktoriken ermöglichen eine lineare Bewegung der Bearbeitungseinheit 3 relativ zu der Arbeitsebene (x-y-Ebene). Die Versorgung der Elektromotoren mit Energie mithilfe einer zugeordneten Antriebssteuerung wird nachfolgend unter Bezugnahme auf die Figuren 2 bis 6 näher erläutert.

Fig. 2 zeigt eine schematische Darstellung einer grundsätzlich aus dem Stand der Technik bekannten Antriebssteuerung 30 in Gestalt eines indirekten Umrichters. Die Antriebssteuerung 30 weist einen Gleichrichter 31 in Gestalt eines Dreiphasengleichrichters auf, der einen Gleichspannungszwischenkreis 33 mit Gleichspannung versorgt. Der Gleichrichter 31 wird aus einem nicht näher dargestellten dreiphasigen Versorgungsnetz (kurz: Netz) mit Energie versorgt, wobei die Phasen mit L1, L2, L3 gekennzeichnet sind. Ein Wechselrichter 32 versorgt den mit dem Bezugszeichen 20 gekennzeichneten Elektromotor 20 über seine drei Phasen U, V, W mit Energie. Der Gleichspannungszwischenkreis 33 weist eine Nenn- Zwischenkreisspannung U_{ZK} auf, die allgemein von der Dimensionierung des Elektromotors 20 abhängig ist. Im Falle der in Fig. 1 beschriebenen Laserbearbeitungsmaschine beträgt die Nenn-Zwischenkreisspannung U_{ZK} üblicherweise zwischen 600 V und 800 V. Die Nenn- Zwischenkreisspannung U_{ZK} fällt über einem Widerstand 34, der einen Bremswiderstand darstellt, ab. Der Widerstand 34 ist in vereinfachter Darstellung zwischen den Klemmen des Gleichspannungszwischenkreises 33 verschaltet.

Zum Antrieb des Elektromotors 20 wird der Gleichspannungszwischenkreis 33, sobald die Zwischenkreisspannung U_{ZK} unterhalb eine vorgegebene Spannung fällt, von dem Gleichrichter 31 aus dem nicht näher dargestellten Netz (symbolisiert durch seine drei Phasen L1, L2, L3) mit Energie versorgt. Die vorgegebene Spannung ist kleiner als die Nenn-Zwischenkreisspannung U_{ZK}. Im generatorischen Betrieb des Elektromotors 20 erfolgt von dem Elektromotor 20 eine Rückspeisung von Bremsenergie in den Gleichspannungszwischenkreis 33, so dass dessen Zwischenkreisspannung U_{ZK} ansteigt, wobei die Bremsenergie über den Widerstand 34 in Wärme umgewandelt wird.

Würde die Bremsenergie nicht über den Widerstand 34 abgebaut, könnte die Zwischenkreisspannung U_{ZK} in unerwünschte Höhe über die Nenn-Zwischenkreisspannung U_{ZK} ansteigen.

Fig. 3 zeigt ein elektrisches Ersatzschaltbild der in Fig. 2 schematisch dargestellten Antriebssteuerung 30. Der Gleichrichter 31 weist pro Phase L1, L2, L3 zwei seriell miteinander verschaltete Gleichrichtelemente 31D in Gestalt von Dioden auf. Die Phasen L1, L2, L3 des Versorgungsnetzes sind jeweils mit den Knotenpunkten der seriell verschalteten Gleichrichtelemente 31D verschaltet. Die Anschlussenden der Serienschaltung der zwei Gleichrichtelemente 31D jeder Phase L1, L2, L3 sind an die Klemmen des Gleichspannungszwischenkreis 33 angeschlossen. Ausgangsseitig des Gleichrichters 31 ist ein Glättungskondensator 31G zwischen den Klemmen des Gleichspannungszwischenkreises 33 geschaltet, um Phasenripple zu glätten. Über dem Glättungskondensator 31G, d.h. den Ausgängen des Gleichrichters 31, liegt die Zwischenkreisspannung U_{ZK} an.

In einer dem Fachmann ebenfalls bekannten Weise weist der Wechselrichter 32 pro Phase U, V, W jeweils zwei steuerbare Schaltelemente 32W auf, deren Laststrecken seriell miteinander verschaltet sind. Die Schaltelemente 32W könnten MOSFETs, Bipolartransistoren, IGBTs und dergleichen sein. Jedes steuerbare Schaltelement 32W weist eine über der Laststrecke verschaltete Freilaufdiode auf. Diese kann integraler Bestandteil eines jeweiligen Schaltelements oder ein diskretes Bauteil sein. An den Knotenpunkten von zwei seriell miteinander verschalteten Schaltelementen 32W einer jeweiligen Phase U, V, W sind die Leiter des Elektromotors 20 angeschlossen. Eine Ansteuerung der steuerbaren Schaltelemente 32W erfolgt mittels einer Steuervorrichtung 22, die als Eingangssignal z.B. eine (Motor-)Drehzahl von einer Messvorrichtung 21 des Elektromotors 20 erhält.

Der in Fig. 2 lediglich schematisch dargestellte Widerstand 34 ist in dem elektrischen Ersatzschaltbild der Fig. 3 in Serie zu einem steuerbaren Schaltelement 35 geschaltet. Die Schaltelement 35 kann z.B. ein MOSFETs oder ein Bipolartransistor sein. Die Serienschaltung aus Widerstand 34 und Laststrecke des Schaltelements 35 ist zwischen den Klemmen des Gleichspannungszwischenkreises 33 verschaltet. Eine Ansteuerung des steuerbaren Schaltelements 35 erfolgt über eine Mess- und Steuereinrichtung 36, welche in Abhängigkeit der messtechnisch ermittelten Höhe der Zwischenkreisspannung U_{ZK} das steuerbare Schaltelement 35 leitend schaltet oder sperrt.

Aus der vorangegangenen Beschreibung wurde bereits deutlich, dass ein Leitendschalten des steuerbaren Schaltelements 35 durch die Mess- und Steuereinrichtung 36 dann erfolgt, wenn in Folge einer durch den Elektromotor 20 in den Gleichspannungszwischenkreis 33 eingespeisten Bremsenergie die Zwischenkreisspannung U_{ZK} ansteigt, z.B. über einen vorgegebenen Schwellwert hinaus. Dann wird die in dem Gleichspannungszwischenkreis enthaltene Energie über den Bremswiderstand 34 in Wärme umgewandelt. Beim Antrieb des Elektromotors 20 über den Gleichrichter 31 aus dem Versorgungsnetz ist das steuerbare Schaltelement 35 sperrend geschaltet.

Der in den Figuren 2 bis 5 dargestellte Elektromotor 20 steht stellvertretend für einen Elektromotor der Aktorik für die Bewegung der Bearbeitungseinheit 3 in x- oder y- oder z-Richtung.

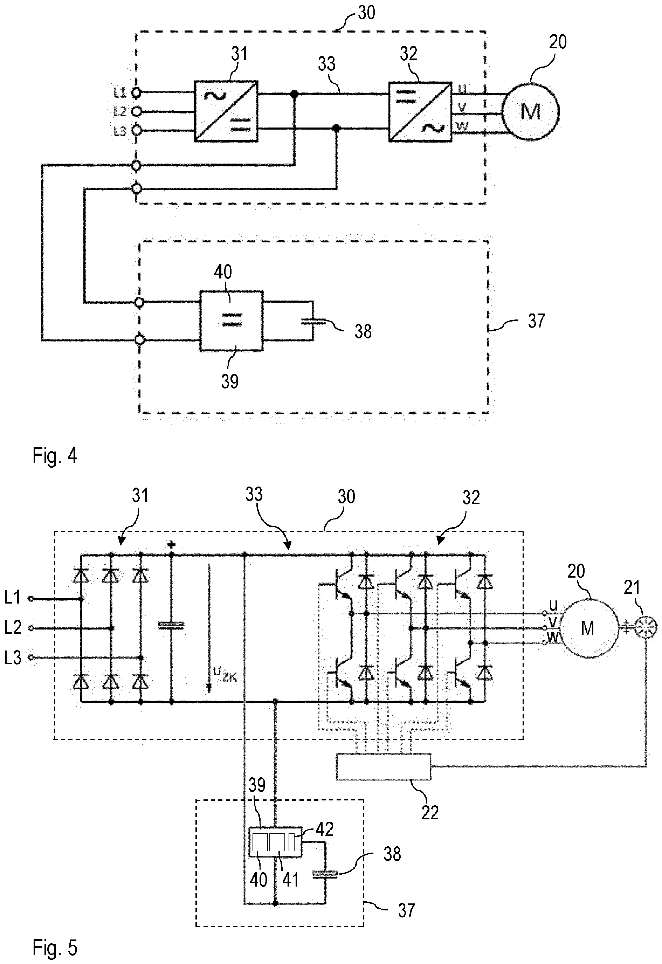

Anstatt die Bremsenergie des Elektromotors 20 über den Widerstand 34 in Wärme umzuwandeln, weist die erfindungsgemäße Laserbearbeitungsmaschine 100 ein Energiespeichersystem 37 (siehe Fig. 4) auf, das dazu ausgebildet ist, im Betrieb der Laserbearbeitungsmaschine 100 die in den Gleichspannungszwischenkreis 33 gespeiste Bremsenergie des Elektromotors 20 zwischenzuspeichern und die zwischengespeicherte Energie bei einer Leistungsanforderung des Elektromotors 20 zu dessen Antrieb wieder in den Gleichspannungszwischenkreis 33 abzugeben.

Hierzu weist das Energiespeichersystem 37 einen Energiespeicher 38 auf. Der Energiespeicher kann beispielsweise ein kapazitiver Energiespeicher, z.B. ein Kondensator oder ein Supercap (sog. Superkondensator) sein. Der Energiespeicher kann auch ein Akkumulator, z.B. ein Lithium-Akkumulator, sein. Alternativ könnte der Energiespeicher 38 auch als kinetischer Energiespeicher, z.B. in Gestalt eines Massenträgheitsspeichers, ausgebildet sein. Der Energiespeicher 38 ist über einen Gleichspannungswandler 40 an den Gleichspannungszwischenkreis 33 angeschlossen. Der Gleichspannungswandler 40 ermöglicht es, abhängig von der im Gleichspannungszwischenkreis 33 vorherrschenden Zwischenkreisspannung U_{ZK} den Energiespeicher 38 beim Einspeisen von Bremsenergie zu laden oder, im Falle einer Leistungsanforderung durch den Elektromotor 20, zu entladen. Das Energiespeichersystem 37, obwohl in Fig. 4 außerhalb der Antriebssteuerung 30 dargestellt, ist Teil der Antriebssteuerung 30. Die Darstellung ist lediglich aus zeichnerischen Gründen gewählt.

Fig. 5 zeigt ein elektrisches Ersatzschaltbild der in einer erfindungsgemäßen Laserbearbeitungsmaschine 100 zum Einsatz kommenden Antriebssteuerung 30 mit dem erfindungsgemäßen Energiespeichersystem 37. Dabei sind der Gleichrichter 31 und der Wechselrichter 32 in bekannter Weise wie in Fig. 3 als indirekter Umrichter ausgebildet, so dass diese Komponenten aus Gründen der Vereinfachung ohne Bezugszeichen in Fig. 5 dargestellt sind. Das Energiespeichersystem 37 ist an die Phasen des Gleichspannungszwischenkreises 33 angeschlossen. Das Energiespeichersystem 37 weist den Energiespeicher 38 sowie eine Mess- und Steuereinrichtung 39 auf. Die Mess- und Steuereinrichtung 39 weist den bereits erwähnten Gleichspannungswandler 40 sowie eine Spannungsmesseinrichtung und eine Steuerungseinrichtung 42 auf.

Die Funktionsweise ist wie folgt: Der Gleichspannungszwischenkreis 33 weist in Abhängigkeit der Nenn-Leistungsaufnahme des Elektromotors 20 eine Nenn-Zwischenkreisspannung U_{ZK,Nenn} auf. Diese beträgt typischerweise zwischen 600 V und 800 V.

In Folge einer Leistungsanforderung des Elektromotors 20 sinkt die Zwischenkreisspannung U_{ZK} unter die Nenn-Zwischenkreisspannung U_{ZK,Nenn}, wodurch der Gleichrichter 31 aus dem Netz den Gleichspannungszwischenkreis 33 speist. Infolgedessen steigt die Zwischenkreisspannung U_{ZK} wieder auf die Nenn-Zwischenkreisspannung UzK,Nenn oder darüber an.

Bei einem generatorischen Betrieb des Elektromotors 20 wird Energie in den Gleichspannungszwischenkreis 33 zurückgespeist. Dies führt zu einer Erhöhung der Zwischenkreisspannung U_{ZK}. Sobald ein über der Nenn-Zwischenkreisspannung U_{ZK,Nenn} definierter Schwellwert (z.B. U_{ZK,Nenn} + 5% oder U_{ZK,Nenn} + 10%) überschritten wird, erfolgt vermittels der Steuerungseinrichtung 42 ein Laden des Energiespeichers 38. Die Messung der Zwischenkreisspannung U_{ZK} und der Vergleich mit dem Schwellwert erfolgt durch die Spannungsmesseinrichtung 41. Das Laden des Energiespeichers 38 erfolgt so lange der generatorische Betrieb anhält und die Zwischenkreisspannung U_{ZK} über der Nenn-Zwischenkreisspannung U_{ZK, Nenn} ist. Bis zur nächsten Leistungsanforderung wird die sich einstellende Zwischenkreisspannung U_{ZK} durch den Energiespeicher 38 gehalten.

Bei einer erneuten Leistungsanforderung des Elektromotors 20 wird dem Energiespeicher 38 Energie genommen, so dass dieser die Zwischenkreisspannung U_{ZK,} solange er Energie zur Verfügung stellen kann, auf einem ihm möglichen Spannungsniveau hält. Sobald die Zwischenkreisspannung U_{ZK} aufgrund der Entladung des Energiespeichers 37 wieder unter die Nenn-Zwischenkreisspannung U_{ZK, Nenn} absinkt, erfolgt ein erneutes Speisen des Gleichspannungszwischenkreises 33 durch den Gleichrichter 31.

Obwohl in Fig. 5 die Steuervorrichtung 22 und die Steuerungseinrichtung 42 des Energiespeichersystems 37 als unterschiedliche Komponenten dargestellt sind, könnten die jeweiligen Steuerfunktionen auch durch eine zentrale Steuereinrichtung übernommen werden.

Die hier beschriebene Antriebssteuerung ist für jeden Elektromotor in dem weiter oben bereits beschriebenen Schaltschrank 19 realisiert. In einer ersten Alternative ist pro Elektromotor, d.h. für jede Aktorik, eine Antriebssteuerung vorgesehen, die einen Gleichspannungszwischenkreis mit eigenen zugeordnetem Energiespeichersystem 37 aufweist.

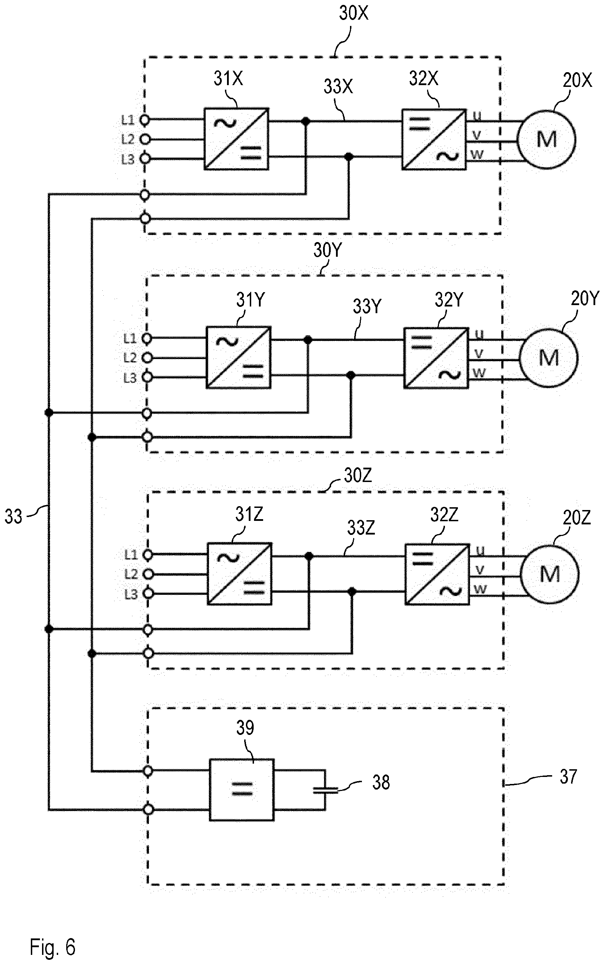

In dem in Fig. 6 dargestellten, weiteren Ausführungsbeispiel weist jeder Elektromotor 20X, 20Y, 20Z für die mehreren Aktoriken der Laserbearbeitungsmaschine 100 eine jeweils zugeordnete Antriebssteuerung 30X, 30Y, 30Z in der wie oben beschriebenen Weise auf, wobei sich die Antriebssteuerungen 30X, 30Y, 30Z jedoch ein gemeinsames Energiespeichersystem 37 teilen. Mit anderen Worten ist das Energiespeichersystem 37 an jeden der Gleichspannungszwischenkreise 33X, 33Y, 33Z, welche einem gemeinsamen Gleichspannungszwischenkreis 33 ausbilden, geschaltet.

Eine erfindungsgemäß ausgebildete Laserbearbeitungsmaschine 100 benötigt im Vergleich zu herkömmlichen Laserbearbeitungsmaschinen zu deren Betrieb weniger Energie und reduziert dadurch die Belastung des speisenden Versorgungsnetzes. Da die primäre Stromaufnahme der Antriebssteuerungen 30 reduziert ist, reduziert sich auch die Leistung, die vom speisenden Netz im Gleichspannungszwischenkreis 33 umgewandelt werden muss. Dadurch sinkt die Abwärmeleistung der Komponenten der Antriebssteuerungen 30 im Schaltschrank 19. Eine geringere Abwärme reduziert die thermische Belastung und reduziert die notwendige Kühlleistung für den Schaltschrank 19. Dies wirkt sich nicht nur auf die Energieeffizienz, sondern auch auf die Herstellkosten der Laserbearbeitungsmaschine und die Lebensdauer der Komponenten der Antriebssteuerung positiv aus.

### B ezugszei chenli ste

- 100: Laserbearbeitungsmaschine
- 1: Bearbeitungseinrichtung
- 2: verfahrbarer Wagen
- 3: Bearbeitungseinheit
- 5: Gehäuse
- 9: Führungsmittel
- 10: Brücke
- 11: Z-Kabelführung
- 12: Verkleidung
- 13: Schlitz
- 14: Rahmen
- 15, 15': Träger des Rahmens
- 16: Laserlichtquelle
- 17: Y-Kabelführung
- 18: X-Kabelführung
- 19: Schaltschrank
- 20: Elektromotor
- 20X, 20Y, 20Z: Elektromotor für Bewegung in x-, y- z-Richtung
- 21: Messvorrichtung
- 22: Steuervorrichtung
- 30: Antriebssteuerung (Umrichter)
- 30X, 30Y, 30Z: Antriebssteuerung (Umrichter) für Elektromotor 20X, 20Y, 20Z
- 31: Gleichrichter
- 31D: Gleichrichtelement
- 31G: (Glättungs-)Kondensator
- 32: Wechselrichter
- 32W: steuerbares Schaltelement
- 33: Gleichspannungszwischenkreis
- 34: (Brems-)Widerstand
- 35: steuerbares Schaltelement
- 36: Mess- und Steuereinrichtung
- 37: Energiespeichersystem
- 38: Energiespeicher
- 39: Mess- und Steuereinrichtung
- 40: Gleichspannungswandler
- 41: Spannungsmesseinrichtung
- 42: Steuerungseinrichtung
- L1, L2, L3: Netzphasen
- U, V, W: Motorphasen
- U_{ZK}: Zwischenkreisspannung

## Patentansprüche

1. Laserbearbeitungsmaschine (100), insbesondere Laserschneidmaschine, mit einer Bearbeitungseinheit (3), die relativ zu einer Arbeitsebene der Laserbearbeitungsmaschine (100) in mindestens einer Richtung (x, y, z) mittels jeweils eines Elektromotors (20; 20X, 20Y, 20Z) linear bewegbar ist, wobei jeder der Elektromotoren (20; 20X, 20Y, 20Z) im Betrieb aus einer zugeordneten Antriebssteuerung (30; 30X, 30Y, 30Z), die einen Gleichspannungszwischenkreis (33) umfasst, mit Energie versorgt wird, wobei
der Gleichspannungszwischenkreis (33) ein Energiespeichersystem (37) aufweist, das dazu ausgebildet ist, im Betrieb der Laserbearbeitungsmaschine (100) in den Gleichspannungszwischenkreis (33) gespeiste Bremsenergie eines jeweiligen Elektromotors (20; 20X, 20Y, 20Z) zwischenzuspeichern und die zwischengespeicherte Energie bei einer Leistungsanforderung eines jeweiligen Elektromotors (20; 20X, 20Y, 20Z) zu dessen Antrieb in den Gleichspannungszwischenkreis (33) abzugeben.

2. Laserbearbeitungsmaschine (100) nach Anspruch 1, **dadurch gekennzeichnet, dass** das Energiespeichersystem (37) einen Energiespeicher (38) aufweist, der über einen Gleichspannungswandler (40) des Energiespeichersystems (37) an den Gleichspannungszwischenkreis (33) angeschlossen ist.

3. Laserbearbeitungsmaschine (100) nach Anspruch 1 oder 2, **dadurch gekennzeichnet, dass** das Energiespeichersystem (37) als Energiespeicher (38) einen kapazitiven Energiespeicher (38), insbesondere einen Kondensator oder einen Supercap, oder einen Akkumulator aufweist.

4. Laserbearbeitungsmaschine (100) nach Anspruch 1 oder 2, **dadurch gekennzeichnet, dass** das Energiespeichersystem (37) als Energiespeicher (38) einen Massenträgheitsspeicher aufweist.

5. Laserbearbeitungsmaschine (100) nach einem der vorhergehenden Ansprüche, **dadurch gekennzeichnet, dass** das Energiespeichersystem (37) eine Spannungsmesseinrichtung (41) zur Bestimmung der Zwischenkreisspannung (U_{ZK}) und eine Steuerungseinrichtung (42), der die von der Spannungsmesseinrichtung (41) erfasste Zwischenkreisspannung (U_{ZK}) der Steuerungseinrichtung (42) als Eingangsinformation zugeführt wird, aufweist, wobei die Steuerungseinrichtung (42) dazu ausgebildet ist, die Energieflussrichtung, insbesondere durch Steuerung des Gleichspannungswandlers (40), aus dem oder in den Gleichspannungszwischenkreis (33) abhängig von einem Vergleich der Zwischenkreisspannung (U_{ZK}) mit zumindest einem vorgegebenen Schwellwert zu steuern.

6. Laserbearbeitungsmaschine (100) nach Anspruch 5, **dadurch gekennzeichnet, dass** der vorgegebene Schwellwert größer als eine Nenn-Zwischenkreisspannung (U_{ZK}) ist.

7. Laserbearbeitungsmaschine (100) nach Anspruch 6, **dadurch gekennzeichnet, dass** der vorgegebene Schwellwert zwischen 5% und 10% größer als die Nenn-Zwischenkreisspannung (U_{ZK}) ist.

8. Laserbearbeitungsmaschine (100) nach Anspruch 6 oder 7, **dadurch gekennzeichnet, dass** die Nenn-Zwischenkreisspannung (U_{ZK}) zwischen 600 V und 800 V beträgt.

9. Laserbearbeitungsmaschine (100) nach einem der Ansprüche 1 bis 8, **dadurch gekennzeichnet, dass** bei einer Mehrzahl von Elektromotoren (20X, 20Y, 20Z), jede zugeordnete Antriebssteuerung (30X, 30Y, 30Z) ein eigenes Energiespeichersystem (37) aufweist.

10. Laserbearbeitungsmaschine (100) nach einem der Ansprüche 1 bis 8, **dadurch gekennzeichnet, dass** bei einer Mehrzahl von Elektromotoren (20X, 20Y, 20Z) alle Antriebssteuerungen (30X, 30Y, 30Z) einen gemeinsamen Zwischenkreis (33) nutzen, wobei an den gemeinsamen Zwischenkreis (33) ein gemeinsames Energiespeichersystem (37) angeschlossen sind.

11. Verfahren zum Betreiben einer Laserbearbeitungsmaschine (100), insbesondere Laserschneidmaschine, mit einer Bearbeitungseinheit (3), die relativ zu einer Arbeitsebene der Laserbearbeitungsmaschine (100) in mindestens einer Richtung mittels jeweils eines Elektromotors (20; 20X, 20Y, 20Z) linear bewegbar ist, wobei jeder der Elektromotoren (20; 20X, 20Y, 20Z) im Betrieb aus einer zugeordneten Antriebssteuerung (30; 30X, 30Y, 30Z), die einen Gleichspannungszwischenkreis (33) umfasst, mit Energie versorgt wird, wobei der Gleichspannungszwischenkreis (33) ein Energiespeichersystem (37) aufweist, bei dem
im Betrieb der Laserbearbeitungsmaschine (100) in den Gleichspannungszwischenkreis (33) gespeiste Bremsenergie eines jeweiligen Elektromotors (20; 20X, 20Y, 20Z) zwischengespeichert wird, und
die zwischengespeicherte Energie bei einer Leistungsanforderung eines jeweiligen Elektromotors (20; 20X, 20Y, 20Z) zu dessen Antrieb in den Gleichspannungszwischenkreis (33) abgegeben wird.

12. Verfahren nach Anspruch 11, bei dem eine Spannungsmesseinrichtung des Energiespeichersystems (37) die Zwischenkreisspannung (U_{ZK}) bestimmt und diese einer Steuerungseinrichtung (42) als Eingangsinformation zuführt, wobei die Steuerungseinrichtung (42) die Energieflussrichtung aus dem oder in den Gleichspannungszwischenkreis (33) abhängig von einem Vergleich der Zwischenkreisspannung (U_{ZK}) mit einem vorgegebenen Schwellwert steuert.
